# EUROPEAN PATENT APPLICATION

(11) **EP 4 819 052 A1**
(43) Date of publication of application: **07.10.2026**
(21) Application number: 26169452.5
(22) Date of filing: 31.03.2026
(51) Int. Cl.: G06T 11/40

(54) **MASK SELECTION**

(30) Priority: 03.04.2025 GB 202505039
(71) Applicant: Imagination Technologies Limited, Kings Langley, Hertfordshire WD4 8LZ (GB)
(72) Inventor: DE LUCAS CASAMAYOR, Enrique, Watford (GB)
(74) Representative: Elkington and Fife LLP

(57) **Abstract**

According to the invention there is provided a method of rendering in a graphics processing system supporting variable fragment shading rate, the method comprising determining whether it is not possible for the shader fragment size to be affected by an attachment fragment shading rate, the shader fragment size being determined by a combination of the attachment fragment shading rate with another fragment shading rate, if it is not possible for the shader fragment size to be affected by an attachment fragment shading rate selecting and applying a sample mask before the system is configured to combine the attachment fragment shading rate with the another fragment shading rate. If it is possible for the shader fragment size to be affected by an attachment fragment shading rate selecting and applying a sample mask after the attachment fragment shading rate is combined with the another fragment shading rate

## Description

This application claims priority from UK patent application 2505039.4 filed on 3 April 2025.

### TECHNICAL FIELD

The present disclosure relates to graphics processing systems, in particular those implementing variable fragment shading rates

### BACKGROUND

Graphics processing systems are typically configured to receive graphics data, e.g. from an application running on a computer system, and to render the graphics data to provide a rendering output. For example, the graphics data provided to a graphics processing system may describe geometry within a three dimensional (3D) scene to be rendered, and the rendering output may be a rendered image of the scene. As another example, a render may be used to populate the contents of a texture, which itself may be used by another render (e.g. to texture an object in an image of the scene). Some graphics processing systems (which may be referred to as "tile-based" graphics processing systems) use a rendering space which is subdivided into a plurality of tiles. The "tiles" are sections of the rendering space, and may have any suitable shape, but are typically rectangular (where the term "rectangular" includes square). As is known in the art, there are many benefits to subdividing the rendering space into tile sections. For example, subdividing the rendering space into tile sections allows an image to be rendered in a tile-by-tile manner, wherein graphics data for a tile can be temporarily stored "on-chip" during the rendering of the tile, thereby reducing the amount of data transferred between a system memory and a chip on which a graphics processing unit (GPU) of the graphics processing system is implemented.

Tile-based graphics processing systems typically operate in two phases: a geometry processing phase and a rendering phase. In the geometry processing phase, the graphics data for a render is analysed to determine, for each of the tiles, which graphics data items are present within that tile. The graphics data items may include geometric primitives such as triangles. Then in the rendering phase (e.g. a rasterisation phase), a particular tile can be rendered by processing those graphics data items which are determined to be present within that tile (without needing to process graphics data items which were determined in the geometry processing phase to not be present within the particular tile).

When rendering an image, it is known that the render may use more sample points than the number of pixels with which an output image will be represented. This over-sampling can be useful for anti-aliasing purposes, and is typically specified to a graphics processing pipeline as a constant (i.e. a single anti-aliasing rate) for the entire image.

More recently, the idea of variable fragment shading rates has been considered. Here, a render may use fewer shading sample points than the number of pixels (which may be termed subsampling) or more shading sample points than the number of pixels (which may be termed 'multisampling), depending on the situation. Moreover, different parts of the same image may have different fragment shading rates. For example, higher sampling rates may still be useful for antialiasing purposes in parts of great detail or focus, but lower shading sampling rates may reduce the processing in rendering areas of uniformity or low importance parts of the image.

During processing masks are used to apply processing to particular samples. However, with the advent of different fragment sizes different masks are needed for each different fragment size as the locations addressed by different bits of the mask will vary depending on the size of the fragment. As an example, the samples identified by specific bits of a mask applied to a 1x1 fragment at a multisampling rate of 8 (e.g. where a string of 8 bits in a mask identifies 8 sample locations within a single pixel) will be different from the samples identified by specific bits of a mask applied to a 2x1 fragment at a multisampling rate of 4 (e.g. where a string of 8 bits in a mask identifies 4 sample locations in one pixel, and 4 sample locations in another pixel).

There is therefore a need to provide a method of selecting and applying a mask suitable for the fragment shading rate used.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect there is provided a method of rendering in a graphics processing system supporting variable fragment shading rate, the method comprising:
determining whether it is not possible for the shader fragment size to be affected by an attachment fragment shading rate, the shader fragment size being determined by a combination of the attachment fragment shading rate with another fragment shading rate;
if it is not possible for the shader fragment size to be affected by an attachment fragment shading rate selecting and applying a sample mask before the system is configured to combine the attachment fragment shading rate with the another fragment shading rate;
if it is possible for the shader fragment size to be affected by an attachment fragment shading rate selecting and applying a sample mask after the attachment fragment shading rate is combined with the another fragment shading rate.

Determining whether it is not possible for the shader fragment size to be affected by an attachment fragment shading rate may comprise determining whether the attachment fragment shading rate is enabled. Furthermore, determining whether it is not possible for the shader fragment size to be affected by an attachment fragment shading rate comprises reading an attachment fragment shading rate flag.

Optionally, determining whether it is not possible for the shader fragment size to be affected by an attachment fragment shading rate comprises determining that the another fragment shading rate is a value that would not be altered by the attachment fragment shading rate.

Optionally, the method further comprises executing, by a processor, a shader program and wherein the sample mask is applied to the input of the shader program. Optionally, the method further comprises executing, by a processor, a shader program and wherein the mask is applied to the output of the shader program.

Optionally, selecting a sample mask comprises a sample mask comprises selecting a sample mask from a plurality of sample masks, wherein the plurality of sample masks comprise sample masks for a plurality of different size fragments. The sample masks for different size fragments use different bits to address different pixels in the fragment.

Optionally, selecting a sample mask comprises selecting a sample mask from a plurality of sample masks, wherein the plurality of sample masks comprise sample masks for a plurality of sampling rates per pixel. Masks for different sampling rates per pixel use different bits to address different pixels in the fragment.

The mask may be configured to indicate coverage of a fragment. Alternatively, or additionally, the sample mask is configured to apply a filter to all the pixels of a fragment.

Optionally, the another fragment shading rate is a pipeline fragment shading rate, a primitive shading rate or a combination of a pipeline fragment shading rate and a primitive fragment shading rate. The another fragment shading rate may be a combination of a pipeline fragment shading rate and a primitive fragment shading rate, and wherein the combination of the pipeline fragment shading rate and the primitive fragment shading rate is determined before determining whether it is not possible for the shader fragment size to be affected by an attachment fragment shading rate.

According to a second aspect there is provided a graphics processing system configured processing system configured to support variable fragment shading rate, wherein the graphics processing system comprises logic configured to:
determine whether it is not possible for the shader fragment size to be affected by an attachment fragment shading rate, the shader fragment size being a combination of the attachment fragment shading rate with another fragment shading rate;
if it is not possible for the shader fragment size to be affected by an attachment fragment shading rate select and apply a sample mask before the system is configured to combine the attachment fragment shading rate with the another fragment shading rate;
if it is possible for the shader fragment size to be affected by an attachment fragment shading rate select and apply a sample mask after the attachment fragment shading rate is combined with the another fragment shading rate.

Optionally, the logic is further configured to execute the shader program.

According to a third aspect there may be provided a graphics processing system configured to perform the method of the first aspect or any of the aforementioned variations.

The graphics processing system may be embodied in hardware on an integrated circuit. There may be provided a method of manufacturing, at an integrated circuit manufacturing system, a graphics processing system. There may be provided an integrated circuit definition dataset that, when processed in an integrated circuit manufacturing system, configures the system to manufacture a graphics processing system. There may be provided a non-transitory computer readable storage medium having stored thereon. There may be a computer readable description of a graphics processing system that, when processed in an integrated circuit manufacturing system, causes the integrated circuit manufacturing system to manufacture an integrated circuit embodying a graphics processing system.

There may be provided an integrated circuit manufacturing system comprising: a non-transitory computer readable storage medium having stored thereon a computer readable description of the graphics processing system; a layout processing system configured to process the computer readable description so as to generate a circuit layout description of an integrated circuit embodying the graphics processing system; and an integrated circuit generation system configured to manufacture the graphics processing system according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Fig. 1 shows a graphics processing system;
Fig. 2 shows a method that can be implemented by a graphics processing system such as that of Fig. 1;
Fig. 3 illustrates how a graphics processing system can process a primitive for shading with a 1x1 fragment shading rate;
Fig. 4 illustrates how a graphics processing system can process a primitive for shading with a 2x2 fragment shading rate,
Fig. 5A illustrates how attachment FSR values can be determined for different fragments generated by sampling a primitive, and Fig. 5B illustrates how those fragments can subsequently be shaded;
Fig. 6A illustrates how 16 attachment FSR texels may correspond to the pixels of one tile, Fig. 6B illustrates how four attachment FSR texels may correspond to the pixels of one tile, Fig. 6C illustrates how one attachment FSR texel may correspond to the pixels of one tile and Fig. 6D illustrates how four tiles may correspond to one attachment FSR texel;
Fig. 7A illustrates how 16 attachment FSR regions may be present in one tile, Fig. 7B illustrates how eight attachment FSR regions may be present in one tile, Fig. 7C illustrates how four attachment FSR regions may be present in one tile, Fig. 7D illustrates how two attachment FSR regions may be present in one tile, Fig. 7E illustrates how one attachment FSR region may be present in one tile and Fig. 7F illustrates how a register may be arranged to store attachment FSR values corresponding to different attachment FSR regions of a tile;
Fig. 8 illustrates different masks for different fragment sizes and sampling rates;
Fig. 9 depicts a method of the invention;
Fig. 10 shows a computer system in which a graphics processing system is implemented; and
Fig. 11 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

The use of different fragment shading rates, as mentioned above, gives greater flexibility in how fragments are shaded by a graphics processing system. In this document the phrase 'fragment shading rate' (and the abbreviation FSR) may be used to denote both a particular technique for providing different rates for performing fragment shading, and to particular fragment shading rate settings or values. The relevant meaning can be distinguished by the associated use of the terms 'technique' or 'value', as appropriate, but in general the relevant meaning will be clear to the skilled person from the context.

Fragment shading rate (FSR) values can be specified to a graphics processing system in a number of ways. One way is to specify FSR values by a 'pipeline' or 'per draw' FSR technique, which associates a particular fragment shading rate value with a particular draw call (and thus for the primitives associated with that draw call). Another way is to specify FSR values by a 'primitive' or 'provoking vertex' FSR technique, which sets a particular fragment shading rate value at a perprimitive granularity. A third way is to specify FSR values by an 'attachment' or 'screen space image' FSR technique, which allows for the fragment shading rate to be specified based on the area of the image being rendered. For example, in the attachment FSR technique the rendering space may be divided into areas, each area (or region) associated with a particular FSR value. The FSR values for the areas of the rendering space may be specified using attachment information defining texels that map to each of the areas of the rendering space, each texel being associated with a FSR value for its corresponding area of the rendering space. Alternatively, a single FSR value may be set for the whole rendering space.

It is noted that the terms "pipeline fragment shading rate", "primitive shading rate" and "attachment fragment shading rate" are terms of art that the skilled person would be familiar with. In particular, these are terms defined by the Vulkan^{®} API standard for 3D graphics. Similarly, the DirectX^{®} standard considers setting variable shading rates in terms of using "pipeline state", a "per primitive attribute" or using an "image-based" approach. The skilled person understands that these terms relate to equivalent features in the different APIs, and whilst the present document primarily uses the terminology from Vulkan^{®} API for ease of understanding, it should be understood that this does not imply a limitation to the use of that particular standard.

These three different techniques for specifying fragment shading rate values may be used individually or in combination. As such, in practice, having all the different techniques available creates different sources of FSR information that need to be reconciled by a graphics processing system. For example, a particular primitive may be part of a particular draw call and rendered in a particular area of the rendering space. In that example, that particular primitive may be associated with some or all of (i) a pipeline FSR value specified as part of the particular draw call, (ii) a primitive FSR value specified for that particular primitive and (iii) an attachment FSR value specified for the particular area of the rendering space in which the primitive is rendered. Indeed, the situation may be more complicated than that - the primitive may fall across one or more boundaries between areas of pixels that map to different attachment FSR texels, so different sample points within the single primitive may have different FSR values associated with them.

The manner in which the values from different FSR sources are combined, to calculate a resolved overall FSR that will be applied for a primitive (or part thereof), can be specified to the graphics processing system by the instructing application. That is, different types of combination operation are possible. In this sense, a combination operation can be mathematical and/or logical in nature. As such, a logical combination operation may be specified that dictates that a value from a particular one of the FSR sources should be selected for use. For example, a so-called 'keep' combination operation can specify that a first one of a pair of FSR values (e.g. the pipeline fragment shading rate and primitive fragment shading rate) should be selected for use. As another example, a so-called 'replace' combination operation can specify that a second one of a pair of FSR values should be selected for use. Another approach may require a mathematical determination to inform a logical operation performed on the different values from the different FSR sources, to determine the resolved overall FSR. For example, a so-called 'min' combination operation can specify that the minimum FSR value of a set or subset of the FSR values should be selected for use. As another example, a so-called 'max' combination operation can specify that the maximum FSR value of a set or subset of FSR values should be selected for use. In these examples, a mathematical determination (i.e. establishing which is the maximum or minimum value) is used to decide which value to use. Other combination operations may be thought of as more 'purely' mathematical. For example, the use of a so-called 'mul' operation that specifies that a set or subset of the FSR values should be multiplied together to calculate the FSR value for use. It will be understood that in principle any other mathematical operation could be used to combine FSR values from different sources.

It will also be understood that multiple combination operations may be used to combine the values from different sources - e.g. a first combination operation may be used to combine a pipeline FSR value and a primitive FSR value, to produce a first combined FSR value, and a second combination operation (which may be of the same type as the first combination operation, or a different type) may be used to combine an attachment FSR value with the first combined FSR value to produce an overall FSR value.

The present disclosure presents ways in which these different sources of fragment shading rate may be handled and combined efficiently in a graphics processing system.

Embodiments will now be described by way of example only.

### General System

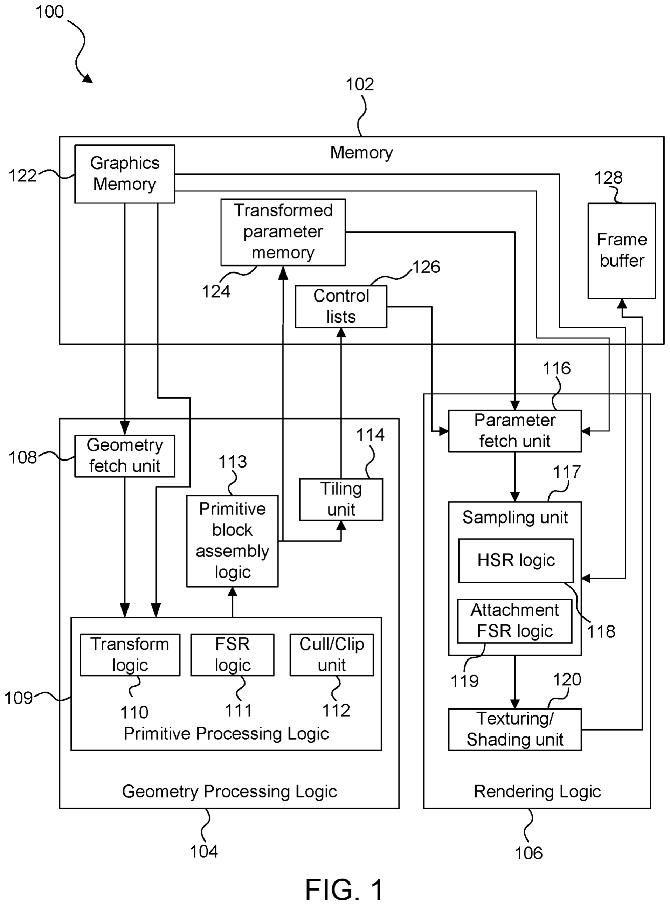

Fig. 1 shows an example graphics processing system 100. The example graphics processing system 100 is a tile-based graphics processing system. As mentioned above, a tile-based graphics processing system uses a rendering space which is subdivided into a plurality of tiles. The tiles are sections of the rendering space, and may have any suitable shape, but are typically rectangular (where the term "rectangular" includes square). The tile sections within a rendering space are conventionally the same shape and size.

The system 100 comprises a memory 102, geometry processing logic 104 and rendering logic 106. The geometry processing logic 104 and the rendering logic 106 may be implemented on a GPU and may share some processing resources, as is known in the art. The geometry processing logic 104 comprises a geometry fetch unit 108; primitive processing logic 109, which in turn comprises geometry transform logic 110, FSR logic 111 and a cull/clip unit 112; primitive block assembly logic 113; and a tiling unit 114. The rendering logic 106 comprises a parameter fetch unit 116; a sampling unit 117 comprising hidden surface removal (HSR) logic 118; and a texturing/ shading unit 120. The example system 100 is a so-called "deferred rendering" system, because the texturing/shading is performed after the hidden surface removal. However, a tile-based system does not need to be a deferred rendering system, and although the present disclosure uses a tile-based deferred rendering system as an example, the ideas presented are also applicable to nondeferred (known as immediate mode) rendering systems or non-tile-based systems. The memory 102 may be implemented as one or more physical blocks of memory and includes a graphics memory 122; a transformed parameter memory 124; a control lists memory 126; and a frame buffer 128.

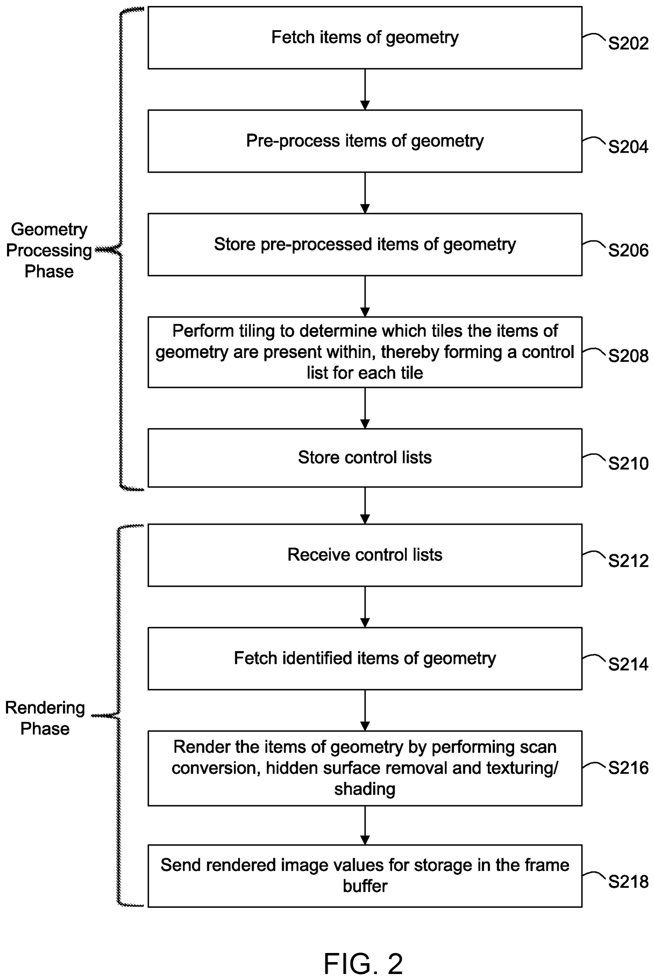

Fig. 2 shows a flow chart for a method of operating a tile-based rendering system, such as the system shown in Fig. 1. The geometry processing logic 104 performs the geometry processing phase, in which the geometry fetch unit 108 fetches geometry data (e.g. previously received from an application for which the rendering is being performed) from the graphics memory 122 (in step 5202) and passes the fetched data to the primitive processing logic 109. The geometry data comprises graphics data items (i.e. items of geometry) which describe geometry to be rendered. For example, the items of geometry may represent geometric shapes, which describe surfaces of structures in the scene. The items of geometry may be in the form of primitives (commonly triangles, but primitives may be other 2D shapes and may also be lines or points to which a texture can be applied). Primitives can be defined by their vertices, and vertex data can be provided describing the vertices, wherein a combination of vertices describes a primitive (e.g. a triangular primitive is defined by vertex data for three vertices). Objects can be composed of one or more such primitives. In some examples, objects can be composed of many thousands, or even millions of such primitives. Scenes typically contain many objects. Items of geometry can also be meshes (formed from a plurality of primitives, such as quads which comprise two triangular primitives which share one edge). Items of geometry may also be patches, wherein a patch is described by control points, and wherein a patch is tessellated to generate a plurality of tessellated primitives.

In step S204 the geometry processing logic 104 pre-processes the items of geometry, e.g. by transforming the items of geometry into screen space, performing vertex shading, performing geometry shading and/or performing tessellation, as appropriate for the respective items of geometry. In particular, the primitive processing logic 109 (and its sub-units) may operate on the items of geometry, and in doing so may make use of state information retrieved from the graphics memory 122. For example, the transform logic 110 in the primitive processing logic 109 may transform the items of geometry into the rendering space and may apply lighting/attribute processing as is known in the art. The resulting data may be passed to the cull/clip unit 112 which may cull and/or clip any geometry which falls outside of a viewing frustum. The remaining transformed items of geometry (e.g. primitives) are provided from the primitive processing logic 109 to the primitive block assembly logic 113 which groups the items of geometry into blocks, which may also be referred to as "primitive blocks", for storage. A primitive block is a data structure in which data associated with one or more primitives (e.g. the transformed geometry data related thereto) are stored together. For example, each block may comprise up to N primitives, and up to M vertices, where the values of N and M are an implementation design choice. For example, N might be 24 and M might be 16. Each block can be associated with a block ID such that the blocks can be identified and referenced easily. Primitives often share vertices with other primitives, so storing the vertices for primitives in blocks allows the vertex data to be stored once in the block, wherein multiple primitives in the primitive block can reference the same vertex data in the block. In step S206 the primitive blocks with the transformed geometric data items are provided to the memory 102 for storage in the transformed parameter memory 124. The transformed items of geometry and information regarding how they are packed into the primitive blocks are also provided to the tiling unit 114. In step S208, the tiling unit 114 generates control stream data for each of the tiles of the rendering space, wherein the control stream data for a tile includes a control list of identifiers of transformed primitives which are to be used for rendering the tile, i.e. a list of identifiers of transformed primitives which are positioned at least partially within the tile. The collection of control lists of identifiers of transformed primitives for individual tiles may be referred to as a "control stream list" or "display list". In step S210, the control stream data for the tiles is provided to the memory 102 for storage in the control lists memory 126. Therefore, following the geometry processing phase (i.e. after step S210), the transformed primitives to be rendered are stored in the transformed parameter memory 124 and the control stream data indicating which of the transformed primitives are present in each of the tiles is stored in the control lists memory 126. In other words, for given items of geometry, the geometry processing phase is completed and the results of that phase are stored in memory before the rendering phase begins.

In the rendering phase, the rendering logic 106 renders the items of geometry (primitives) in a tile-by-tile manner. In step 3212, the parameter fetch unit 116 receives the control stream data for a tile, and in step S214 the parameter fetch unit 116 fetches the indicated transformed primitives from the transformed parameter memory 124, as indicated by the control stream data for the tile. In step S216 the rendering logic 106 renders the fetched primitives by performing sampling on the primitives to determine primitive fragments which represent the primitives at discrete sample points within the tile, and then performing hidden surface removal and texturing/shading on the primitive fragments. In particular, the fetched transformed primitives are provided to the sampling unit 117 (which may also access state information, either from the graphics memory, or stored with the transformed primitives), which performs sampling and determines the primitive fragments to be shaded. As part of determining the primitive fragments to be shaded, the sampling unit 117 uses hidden surface removal (HSR) logic 118 to remove primitive fragments which are hidden (e.g. hidden by other primitive samples). Methods of performing sampling and hidden surface removal are known in the art. Conventionally, the term "fragment" refers to a sample of a primitive at a sampling point, which is to be shaded to assist with determining how to render a pixel of an image (N.B. with antialiasing, multiple samples might be shaded to determine how to render a single pixel). However, with variable FSR, there may not be a one to one correspondence between the fragments generated by sampling, and the fragments that are shaded. Therefore, the terms "sampler fragments" (fragments created by sampling primitives) and "shader fragments" (fragments upon which shader programs are executed) are used herein where it is necessary to distinguish between fragments at different units of the GPU. For example, one shader fragment may be processed to determine colour values for more than one sampler fragment. The term "sampling" is used herein to describe the process of generating discrete fragments (sampler fragments) from items of geometry (e.g. primitives), but this process can sometimes be referred to as "rasterisation" or "scan conversion". As mentioned above, the system 100 of Fig. 1 is a deferred rendering system, and so the hidden surface removal is performed before the texturing/shading. However, other systems may render fragments before performing hidden surface removal to determine which fragments are visible in the scene.

Sampler fragments which are not removed by the HSR logic 118 are provided from the sampling unit 117 to the texturing/shading unit 120, where, as shader fragments, texturing and/or shading is applied. The texturing/shading unit 120 is typically configured to efficiently process multiple fragments in parallel. This can be done by determining individual fragments that require the same processing (e.g. need to run the same shader) and treating them as instances of the same task, which are then run in parallel, in a SIMD (single instruction, multiple data) processor for example. To assist with this, in some implementations, sampler fragments from the same primitive may be provided to the texturing/shading unit 120 in so-called 'microtiles', being groups of sampler fragments. A microtile may correspond to, for example, a 4x4 array of sample points corresponding to a particular area of the render space, and thus may include up to 16 sampler fragments (depending on the primitive coverage within the microtile), and thus up to 16 task instances, if each sampler fragment is shaded as one shader fragment. It will be understood that these microtiles are separate to the 'tiles' used in tile-based rendering. As explained above, a tile is a sub-division of the overall render space for which the graphics data can be temporarily stored "on-chip" during the rendering of the tile. A microtile represents the sampling (and optionally hidden surface removal) result of part or all of a particular primitive. In other words, several microtiles may represent a single primitive, and many primitives may be present in a single tile.

Although it is not shown in Fig. 1, the texturing/shading unit 120 may receive texture data from the memory 102 in order to apply texturing to the primitive fragments, as is known in the art.

The texturing/shading unit 120 may apply further processing to the primitive fragments (e.g. alpha blending and other processes), as is known in the art in order to determine rendered pixel values of an image. The rendering phase is performed for each of the tiles, such that a whole image can be rendered with pixel values for the whole image being determined. In step S218, the rendered pixel values are provided to the memory 102 for storage in the frame buffer 128. The rendered image can then be used in any suitable manner, e.g. displayed on a display, or stored in memory or transmitted to another device, etc.

### Interaction of FSR with General System

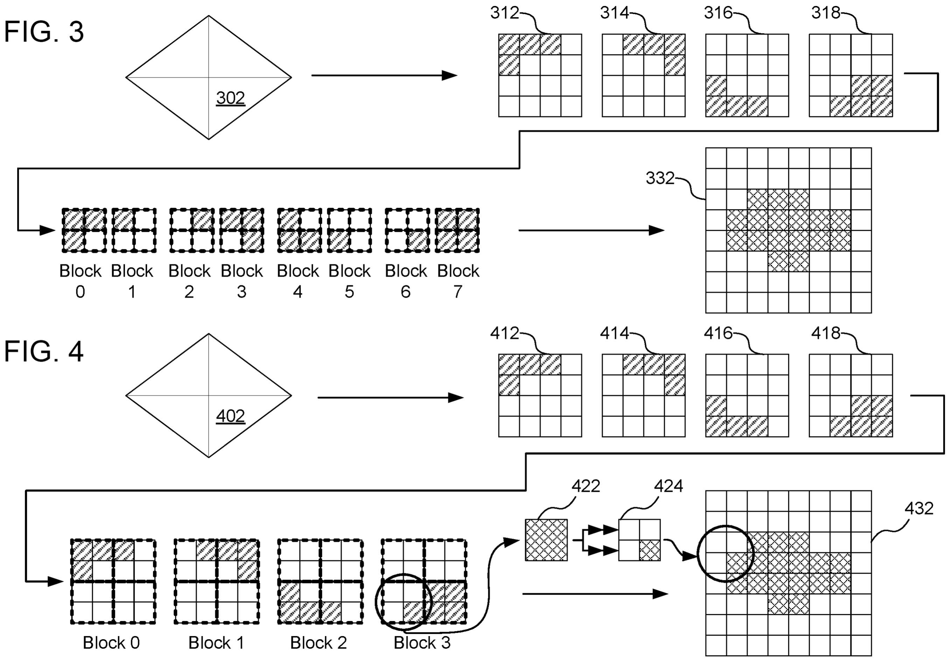

Figs 3 and 4 illustrate how different fragment shading rate values can affect the workload on the general processing system set out above.

Fig. 3 illustrates the simplest situation of using a 1x1 fragment shading rate value, in which each shader fragment instance corresponds to one sampler fragment. In the example, an object 302 is formed by four right-angular triangle primitives meeting at the centre of the object. During rasterisation, it is determined that the object 302 covers four microtiles 312, 314, 316 & 318 (a microtile being, in this example, a 4x4 array of sampler fragments). In the example, each primitive is in a single microtile for ease of understanding, but this need not be the case in practice. The sampler fragment coverage within each microtile 312, 314, 316 & 318 is determined and indicated by the cross-hatching. In this example, using a 1x1 FSR value, each sampler fragment corresponds to a shader fragment that is shaded individually during rasterisation, and so corresponds to one shading task instance. In this example, the shader fragments are grouped into blocks of instances (Blocks 0 to 7 in Fig. 3) for shading in parallel. In this example, 2x2 instances from the microtiles 312, 314, 316 & 318 are grouped into a block (i.e. Blocks 0 & 1 are derived from microtile 312, Blocks 2 & 3 are derived from microtile 314, Blocks 4 & 5 are derived from microtile 316, Blocks 6 & 7 are derived from microtile 318), but this depends on the configuration of the texturing/shading unit. To emphasise that each shader fragment, despite the block grouping, is shaded individually, a dashed box is shown around each shader fragment in each of the blocks. As such, the contents of each dashed box can be considered to be a task instance to be processed (i.e. shaded) by texturing/shading unit 120. After shading, in this simple example, the shading results can be directly combined to form the output 332 (in which the fact that the fragments have been processed is indicated by use a different cross-hatching).

In contrast, Fig. 4 illustrates the use of a 2x2 fragment shading rate value, in which each shader fragment corresponds to 2x2 sampler fragments. The example begins in a similar way to the Fig. 3 example, with the primitives forming object 402 being determined to cover four microtiles 412, 414, 416 & 418. Again, each microtile 412, 414, 416 & 418 in the example corresponds to an array of 4x4 sample points. Again, the sampler fragment coverage within each microtile is indicated by the cross-hatching. Whilst this 4x4 sampler granularity is retained for coverage information (as will be seen later), the 2x2 fragment shading rate value means that the shader fragments and therefore the task instances for shading are created from 2x2 sets of sampler fragments, which are then grouped into blocks (Blocks 0 to 3 in Fig. 4, with Block 0 being derived from microtile 412, Block 1 being derived from microtile 414, Block 2 being derived from microtile 416, Block 3 being derived from microtile 418). As in Fig. 3, dashed boxes have been shown around each shader fragment in the blocks in Fig. 4. However, in contrast to Fig. 3, it will be seen that the content of each dashed box corresponds to four (that is: 2x2) of the original sampler fragments from microtiles 412, 414, 416 & 418. A single shader task instance is run for each dashed box. Put another way, shader fragments are created with each fragment corresponding to four original sampler fragments, and a single shading task is created for each shader fragment. As shown for one of the dashed boxes from Block 3, this produces a single shading result 422 corresponding to the original sampler fragments for which the task instance was constructed. That single shading result 422 can then be recombined with the coverage information (e.g. as shown in microtiles 412, 414, 416 & 418) to produce a set of appropriately shaded fragments 424 at the same spatial resolution as the original set of 2x2 sampler fragments (in the illustrated example, this results in a single shaded fragment at that resolution). After performing a similar process for each task instance, the shaded fragments can be combined to form the output 432. In other words, although the 'coarser' shader fragment size in this example causes sampler fragments to be grouped together to be shaded, in a way that can also cover sample points which may not actually be covered by the primitive being shaded, the shading results 422 are applied only at the sample positions known to be covered, meaning that the outputs 332 & 432 from Figs 3 and 4 are the same in terms of spatial coverage. However, fewer task instances need to be processed to achieve the same (in terms of spatial coverage) output, leading to greater processing efficiency. That can be seen by comparing the number of dashed boxes in the blocks of Fig. 3 compared to those in Fig. 4 - Fig. 3 requires 32 dashed boxes (shader task instances) whereas Fig. 4 only requires 16. On the other hand, that processing efficiency comes at a loss of spatial resolution when determining shading results. That is, although the outputs 332 and 432 may have the same spatial coverage, there may be less variation in the shading results within the covered area in the output of Fig. 4. There may not be any difference, depending on the uniformity of the area covered, and it is thus up to the programmer to judge when such loss of spatial resolution in the shading results are an acceptable trade-off for increased processing efficiency.

It will be noted that in Fig. 3, there are some task instances (dashed boxes) in Blocks 0-6 which do not contain any sampler fragments and so do not actually require shading. Similarly, in Fig. 4, there are task instances in Blocks 0-3 which do not contain any sampler fragments that require shading. Such 'empty' or 'helper' instances can be created if the system architecture expects to receive blocks containing a certain number of task instances (e.g. 2x2 instances in the examples presented). Whilst systems such as SIMD systems are most efficient when every instance being processed is 'useful' work, the system can still operate by using such helper instances, and can still operate (overall) more efficiently that a system which does not exploit parallelism.

### Different Sources of FSR Information

As mentioned above, there are different possible sources of FSR information, and it is useful to consider the manner in which those different sources of FSR information are submitted to the system.

An application instructing a graphics processing system, such as system 100, to render a scene typically submits instructions to the system as one or more render passes (which may be considered as individual renders used to build a final output image, for example).

Each render pass can include multiple draw calls. A draw call is a mechanism by which the application can submit data for display. A draw call may contain data about how to represent objects (or parts thereof) in a scene to be rendered, by using one or more primitives that are defined by the position of one or more vertices. A draw call also contains state information, and primitives forming an object (or pad thereof) may share common state information. Conventionally, this state information may include (but is not limited to) drawing modes, textures and shader programs associated with rendering the relevant primitives.

Each render pass may also be composed of multiple subpasses. Each subpass may reference particular attachments for use in a stage of the render operation of the render pass. 'Attachment' is a term well known to the skilled person from the Vulkan^{®} standard, and in general may be a resource created or used during rendering. The skilled person understands the equivalents to 'attachments' in other standards. In the present context of FSR (and irrespective of whether the system is implementing the Vulkan standard), a FSR attachment may be considered to be an image or texture that allows the system to create to a 'level of detail mask' for the render space. In other words, each pixel in the render space can be assigned an attachment fragment shading rate by the corresponding texel in the fragment shading rate attachment.

The first two FSR techniques mentioned earlier, namely pipeline FSR and primitive FSR, specify FSR values in relation to the geometry being rendered, whereas the third technique, attachment FSR, specifies FSR values in relation to the rendering space. As such, pipeline FSR and primitive FSR information may be submitted to the graphics processing system as state information associated with particular primitives (i.e. particular groups of primitives in the context of pipeline FSR), whereas attachment FSR information may be submitted as an attachment associated with a particular subpass. The combination operations specifying how the different FSR values from the different sources should be combined may also be provided to the system as state information.

A given system may support all or some of the three FSR techniques mentioned above. The present invention is particularly concerned with systems that support the attachment FSR technique and at least one of the pipeline FSR technique and the primitive FSR technique. Such systems include systems in which the attachment fragment shading rate value will be combined with only the pipeline fragment shading rate, systems in which the attachment fragment shading rate value will be combined with only the primitive fragment shading rate, and systems in which the attachment fragment shading rate value will be combined with both the pipeline fragment shading rate and the attachment fragment shading rate value will be combined with only the primitive fragment shading rate.

As the attachment FSR information is only available with the subpass it is only available at a later stage in the processing. In contrast, the pipeline and primitive FSR information is available with the primitives.

### Combining FSR rates

In systems that support both the pipeline and primitive FSR techniques, the pipeline and primitive FSR information are combined to generate a combined FSR rate and this may occur during the geometry phase processing. The combination of the pipeline and primitive FSR may be by any known method. Examples are taking the maximum shading rate, or the minimum or the maximum or minimum within a range.

It might naively be assumed that it would make sense to combine the attachment FSR value with the values from those other sources at the same time (or immediately thereafter). However, as discussed above, the attachment FSR technique defines FSR values in a different way to the other sources, in terms of the rendering space rather than particular primitives. As such, in the type of graphics processing system illustrated in Fig. 1, with separate geometry processing logic 104 preceding separate rendering logic 106, it would require significant addition to the geometry processing logic 104 to determine the relevant attachment FSR value for each primitive at that stage. That is because it would require identifying the screen position of each primitive, to determine the corresponding attachment FSR value.

Therefore, it is more efficient to store a first fragment shading rate for a primitive during a geometry processing phase and to delay combination with the attachment FSR value until the rendering phase. The first fragment shading rate may be a preliminary combined fragment shading rate, calculated combining pipeline and primitive FSR values for the primitive, or may be the pipeline or primitive FSR value for the primitive if only one of those was specified (although, in practice, if a system supports both pipeline and primitive FSR techniques, dedicated hardware may still run the combination operation to determine a 'combined' FSR value that is the same as the single input FSR value). In the rendering phase, when the primitive has been processed to determine individual sampler fragments, the relevant attachment FSR value for a fragment can be determined and combined with the combined FSR value for the primitive from which the fragment is derived. That results in an overall FSR value, which can be the final FSR value used for shading the fragment.

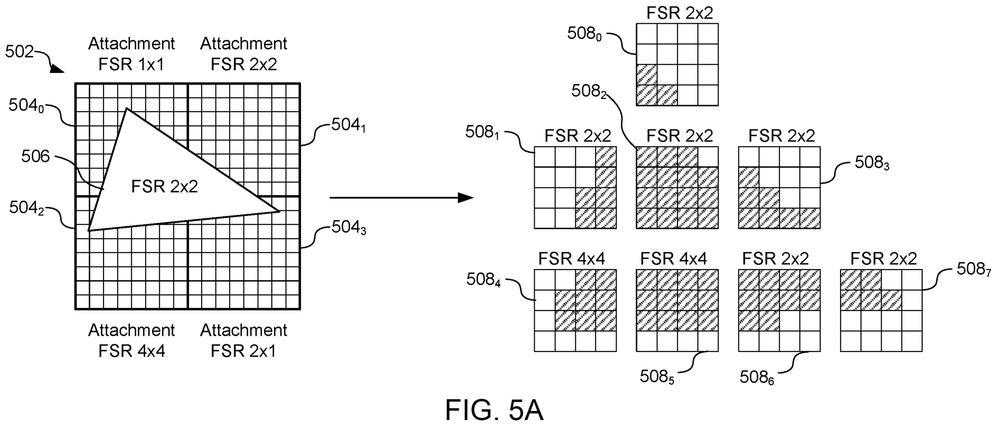

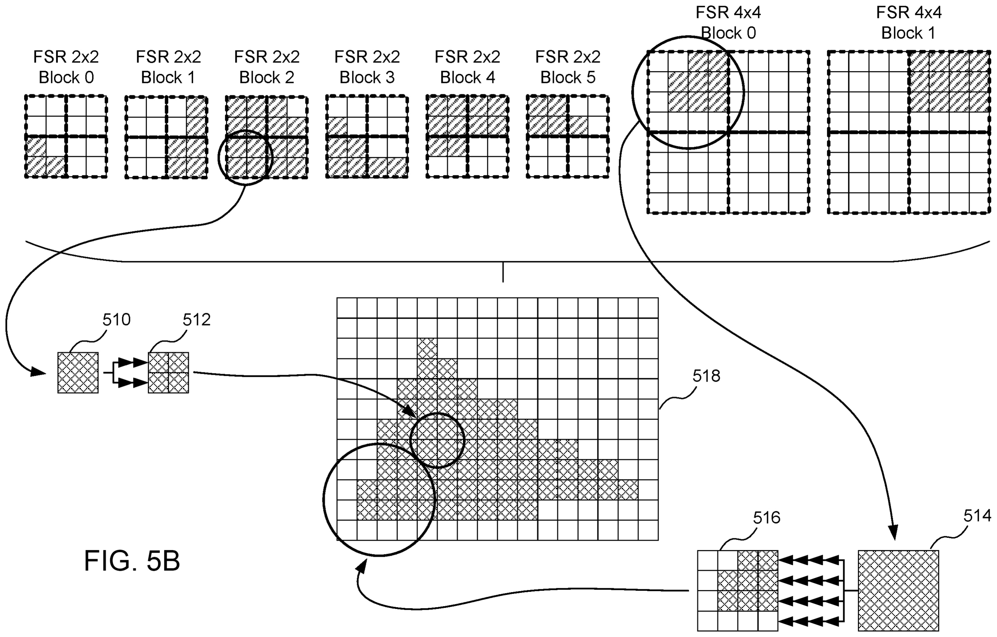

Figs. 5A and 5B illustrate (in a similar manner to how Figs. 3 and 4 illustrated how a single FSR value interacts with a graphics processing system) how the attachment FSR technique interacts with other sources of FSR values in a graphics processing system.

In the example of Figs. 5A and 5B, the attachment texel corresponds (or maps) to an area of 8x8 pixels, meaning that the rendering space is divided into a grid of 8x8 pixel areas, and an FSR value is specified for each such 8x8 pixel area. Those FSR values may be different or the same (although, in practice, if all the texels had the same FSR value, a larger FSR texel size would likely be more appropriate/ efficient). Fig. 5A illustrates a portion 502 of a rendering space that contains four pixel areas 504₀₋₃, and in this example each pixel area corresponds to a different attachment texel that specifies a different FSR value (the attachment texel corresponding to pixel area 504₀ specifies an FSR value of 1x11x1; the attachment texel corresponding to pixel area 504₁ specifies an FSR value of 2x2; the attachment texel corresponding to pixel area 504₂ specifies an FSR value of 4x4; the attachment texel corresponding to pixel area 504₃ specifies an FSR value of 2x1). The area of pixels corresponding to a particular FSR texel or value may also be referred to as an FSR region.

A triangular primitive 506 overlaps the four pixel areas 504₀₋₃. The primitive 506 is associated with its own FSR value, which in this case is a 2x2 FSR value. This could be the 'first FSR value' mentioned above. In any case, the FSR value associated with the primitive is combined with the attachment FSR value during the sampling process for the primitive. In this case, as illustrated in Fig. 5A, although the attachment texels correspond to pixel areas of 8x8 pixels, the microtile size is still 4x4 samples, and so the primitive 506 is found to overlap eight microtiles 508₀₋₇ (and the sample coverage of the primitive 506 within each microtile is indicated by cross hatching). In turn, each microtile overlaps a pixel area corresponding to a particular attachment texel, associated with a particular attachment FSR value. For the sampler fragments within each microtile, an overall FSR value (i.e. which might be a 'second' overall FSR value if the primitive's FSR value was a first, preliminary, combined value derived from combining pipeline and primitive FSR values) can be calculated based on the FSR value associated with the primitive and the FSR value of the attachment texel corresponding to the pixel area that the microtile is overlapping. So, for sampler fragments in microtile 508₀, derived from pixel area 504₀, the attachment FSR value is 1x1. In this example the combination operation for the attachment FSR value and the FSR value associated with the primitive is a 'maximum' combiner, so the FSR value for the for the sampler fragments in microtile 508₀ is 2x2 (being the FSR value associated with the primitive 506, which is larger than the 1x1 FSR value of the corresponding attachment texel). With similar reasoning it can be understood how the other FSR values shown in Fig. 5A for the sampler fragments in each of the eight microtiles 508₀₋₇ are derived. It can be seen that for many of the microtiles the resulting FSR value for the sampler fragments they contain is 2x2, but two microtiles 508₄ & 508₅ have an FSR value of 4x4 for the sampler fragments they contain.

It is noted that although the forgoing description relates the position of the microtiles to the attachment texels, to determine the relevant attachment FSR, in other implementations it may be the positions of the fragments themselves which are considered with respect to the attachment texels.

Fig. 5B continues the rasterisation process started in Fig. 5A. Based on the FSR values, sampler fragments from the microtiles 508₀₋₇ illustrated in Fig.5A are grouped into blocks of shader fragments for shading in parallel. The five microtiles with FSR values of 2x2 (microtiles 508₀₋₃ and 508₅₋₇) are converted to FSR 2x2 Blocks 0-5 in Fig. 5B. As in Figs 3 and 4, a dashed box is shown around each shader fragment in each of the blocks. In addition, the two microtiles with the 4x4 FSR value (microtiles 508₄ & 508₅) are converted to FSR 4x4 Blocks 0 & 1 in Fig. 5B. Again, a dashed box is shown around each shader fragment within that block.

As previously discussed with respect to Figs. 3 and 4, a single shader task instance is run for each dashed box. As shown for one of the dashed boxes from FSR 2x2 Block 2, this produces a single shading result 510 corresponding to the original sampler fragments for which the task instance was constructed. That single shading result 510 can then be recombined with the coverage information from original microtile 508₂ to produce a set of appropriately shaded fragments 512 at the same spatial resolution as the original set of 2x2 sampler fragments. In this case, all four of the sample points to which the task instance corresponds are found to be covered by the primitive, so four shaded fragments are obtained. In contrast, one of the dashed boxes from FSR 4x4 Block 0 is shown to produce a single shading result 514 corresponding to 16 sample points that were not all covered by the primitive for which the task instance was constructed. In this case the primitive only covered eight of the 16 sample points to which the task instance corresponded, so when the single shading result 514 is recombined with the coverage information from original microtile 508₄ it produces eight fragments shaded in accordance with the single shading result 514, but at the spatial resolution of the original sampler fragments. After performing a similar process for each task instance, the shaded fragments can be combined to form the output 518.

It will be understood that although, compared to Figs. 3 and 4, the introduction of the attachment FSR technique opens up the possibility of different FSR values for different parts of the same primitive, once the FSR values for individual fragments have been determined the process is much the same as previously described. In other words, although the coarser fragment size (compared to shading each sample point individually) causes sampler fragments to be grouped together to be shaded, in a way that can also cover sample points which may not actually be covered by the primitive being shaded, the shading results 510 and 514 are applied only at the sample positions known to be covered. This means, fewer task instances need to be processed to achieve the shading output, leading to greater processing efficiency.

Returning to the system of Fig.1, it was previously described that fetched transformed primitives are provided to the sampling unit 117 which performs the sampling and determines the primitive fragments to be shaded. As part of determining the primitive fragments to be shaded, the sampling unit 117 removes primitive fragments which are hidden (e.g. hidden by other primitive fragments). Primitive fragments which are not removed by the HSR logic 118 of the sampling unit 117 are provided (e.g. as microtiles) to the texturing/shading unit 120, which applies texturing and/or shading to primitive fragments.

As such, to incorporate attachment FSR, the parameter fetch unit 116 also retrieves the attachment containing the FSR information from the graphics memory 122, as shown in Fig. 1. The parameter fetch unit 116 then passes the FSR information from the attachment to the sampling unit 117 (along with the control stream data and transformed primitives indicated by the control stream data, as previously described). The sampling unit 117 contains attachment FSR logic 119. The attachment FSR logic 119 is configured to combine (based on a combination operation originally submitted to the system as state information) an FSR value associated with a primitive fragment (e.g. an FSR value stored in a primitive block containing the primitive information as described above, which may be a combination of pipeline and primitive FSR values as determined by FSR logic 111) with an attachment FSR value.

This arrangement, of having the parameter fetch unit 116 retrieve the attachment and having the sampling unit 117 process the attachment information (i.e. combine the attachment FSR values with the other FSR values), may seem unintuitive. That is, it might be assumed that it would be preferable for the sampling unit 117 to directly retrieve the attachment itself, or for the parameter fetch unit 116 to process the attachment FSR values after it has retrieved the attachment. However, the described arrangement takes advantage of the fact that the sampling unit 117 may itself contain multiple parallel processing units or pipelines. That is, it would be inefficient for each of the parallel pipelines within the sampling unit 117 to separately fetch the required attachment information, as this could result in the same attachment being read from the memory multiple times. On the other hand, the sampling unit 117 is already configured to handle sampling the geometry, and so can efficiently incorporate the additional considerations introduced by the attachment FSR values. In contrast, the parameter fetch unit 116 can retrieve the attachment and provide the FSR information to all the pipelines within the sampling unit 117 at once, but is not configured to handle geometry sampling and so it would not be efficient to adapt that unit to handle processing the attachment FSR values. As such, the described arrangement is the most efficient way of handling the attachment FSR information. In other words, it is advantageous for the rendering logic 106 to use attachment FSR values multiple times based on a single retrieval of the attachment information from the graphics memory 122. Still, in other implementations the position of the attachment FSR logic may be different.

When it comes to determining the correct attachment FSR value for fragments derived from a primitive, the attachment FSR logic 119 in the rendering logic 106 is configured to determine the position of the sampler fragment within the tile and the mapping to the corresponding attachment FSR texel. The skilled person will understand that determining the position of a fragment within the render space is part of the ordinary function of the rendering logic 119, and so that is not discussed in detail here.

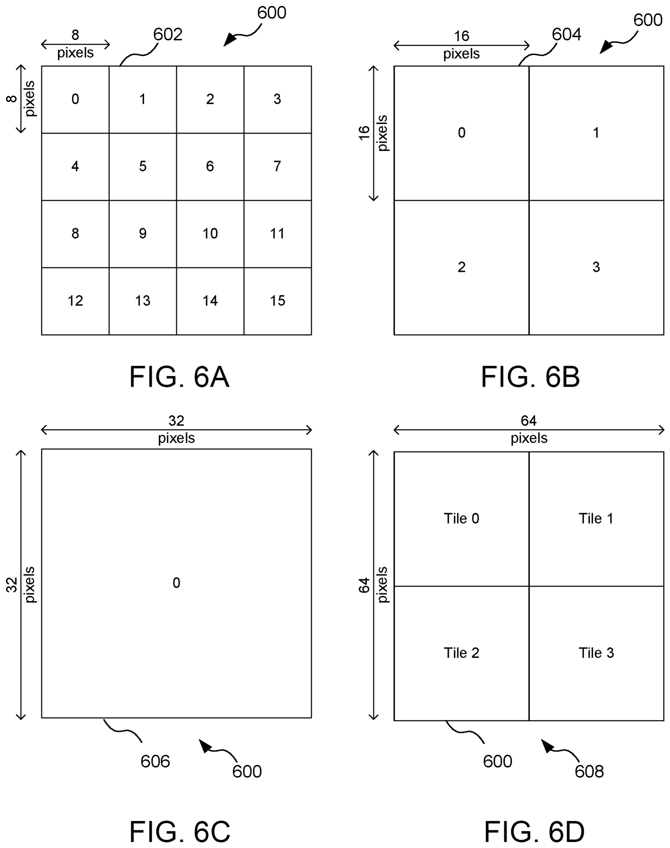

The FSR attachment indicates a texel size and an attachment FSR value for each texel. Example texel sizes may be 8x8, 16x16, 32x32, 64x64, 128x128 and 256x256 pixels, although other values may be used - the particular values available will depend on the system. Considering a system with a minimum FSR texel size of 8x8 and a maximum tile size of 32x32 pixels, it can be understood that there may be up to 16 FSR texels that map to the area of one tile. This is illustrated in Fig. 6A, showing how a tile 600 of size 32x32 pixels may be divided into 16 areas 602 (labelled with indices 0 to 15) of size 8x8 pixels, with each 8x8 pixel area corresponding to one 8x8 FSR texel. The number of FSR texels corresponding to tile 600 cannot be greater in this example. However, the number of FSR texels corresponding to tile 600 may be smaller. Fig. 6B illustrates how a tile 600 of size 32x32 pixels may be divided into just 4 areas 604 (labelled with indices 0 to 3) of size 16x16 pixels, with each 16x16 pixel area corresponding to one 16x16 FSR texel. Similarly Fig. 6C illustrates how a tile 600 of size 32x32 pixels may correspond to a single pixel area 606 (labelled with index 0) corresponding to an FSR texel of size 32x32 pixels.

Although the examples of Figs 6A-C all show the same tile size, other tile sizes and shapes are possible, and the skilled person will understand that the number of FSR texels corresponding to the pixel areas within a tile will not only depend on the size of the FSR texel but also the size of the tile. It will also be understood that whilst tile size within a particular system may not vary in terms of the sample coverage, there may be tiles of different pixel size/ coverage due to some tiles requiring anti-aliasing. For example, a system with a 'normal' tile size of 32x32 pixels may also use tiles of 32x16 pixels (e.g. tiles 32 pixels wide and 16 pixels high) in size when operating with an anti-aliasing setting requiring twice as many samples per pixel in the height as in the width. In that case both 'normal' and anti-aliasing tiles have the same dimensions when considering the number of samples (i.e. 32x32) and hence hold equivalent amounts of data, but as there is not a one-to-one correspondence between the number of samples and the number of pixels in the anti-aliasing tiles they have different pixel dimensions to 'normal' (without anti-aliasing) tiles. In this example, the anti-aliasing tiles would only map to 8 FSR texels of pixel size 8x8 whilst 'normal' tiles would map to 16 FSR texels.

Further, as shown in Fig. 6D, it may be the case that the FSR texel maps to an area bigger than a single tile. Fig. 6D shows how an FSR texel of size 64x64 pixels may correspond to a pixel area 808 that covers four tiles 600 of size 32x32 pixels. In this situation, each of Tiles 0-3 have a single attachment FSR region, in a similar way to the Fig. 6C situation, it is just that (when considering a single tile) the single attachment FSR region in the tile is smaller than the overall attachment FSR texel.

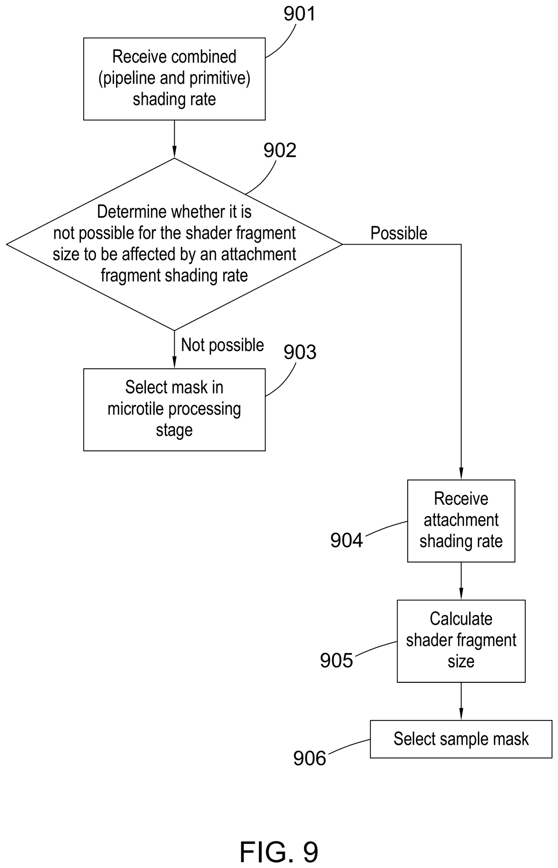

It will therefore be understood that the number of different attachment FSR regions in a tile can vary, being one at a minimum (assuming attachment FSR is in use), and with a maximum number of regions determined by the maximum tile size and the minimum FSR texel size. Taking the previous example of a system with a FSR texel sizes of 8x8, 16x16, 32x32, 64x64, 128x128 and 256x256 pixels, Figs 9A-E show examples of how different FSR regions may be present in different tiles based on a fixed tile size of 32x32 samples.

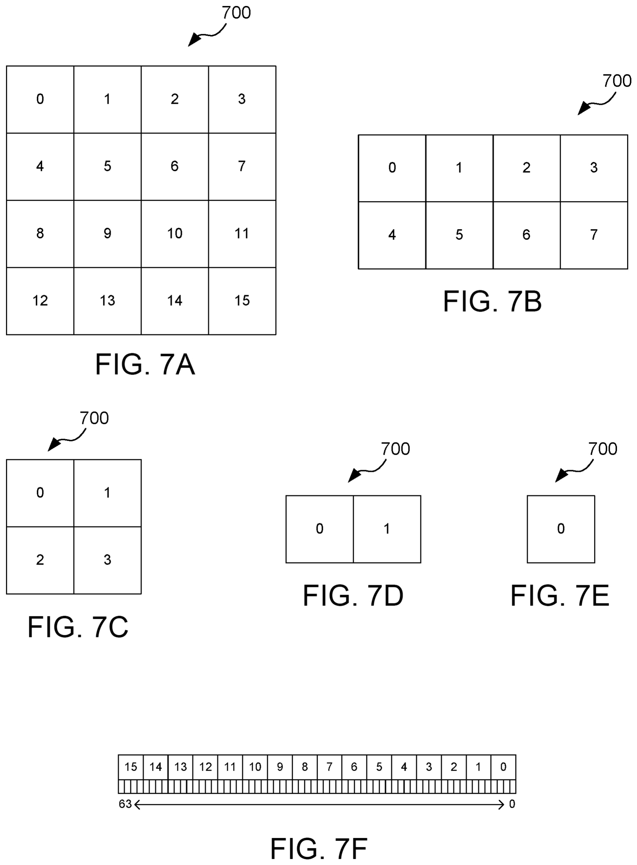

Fig. 7A shows a similar situation to Fig. 6A - 16 different FSR regions can occur when a tile 700 corresponds to 32x32 pixels, and the FSR texel size is the minimum of 8x8 pixels.

Fig. 7B shows the situation previously discussed but not illustrated, wherein a tile can correspond to 32x16 pixels due an anti-aliasing setting requiring only one sample per pixel in the width direction but two samples per pixel in the height direction, and the FSR texel size is still the minimum of 8x8 pixels.

Figs 7C-7E show situations that can occur as either the FSR texel size increases or the anti-aliasing sample rate is increased.

For example, Fig 7C could illustrate the different FSR regions when an anti-aliasing setting requires two samples per pixel in both the height and width directions, but still using the minimum 8x8 FSR texel size. Alternatively it could illustrate a situation in which there is no antialiasing, but 30 the FSR texel size has increased to 16x16 pixels.

Fig. 7D could illustrate the different FSR regions when using an anti-aliasing setting requiring only one sample per pixel in the width direction but two samples per pixel in the height direction, but with an FSR texel size increased to 16x16 pixels. Alternatively, it could illustrate a situation in which the FSR texel size is still only 8x8 pixels, but for which the anti-aliasing rates have been doubled compared to Fig. 7B - i.e. requiring two samples per pixel in the width direction and four samples per pixel in the height direction.

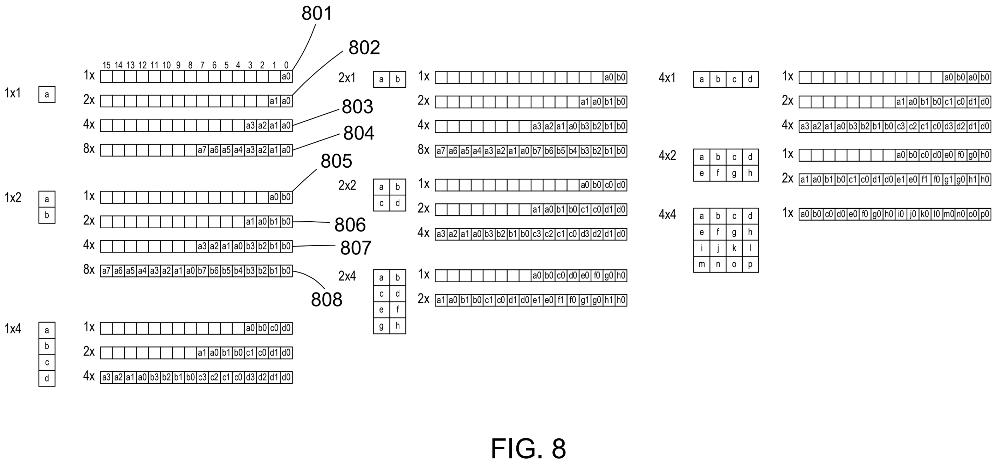

Fig. 7E could illustrate the different FSR regions when an anti-aliasing setting requires four samples per pixel in both the width and height directions, in combination with an 8x8 pixel FSR texel size. Alternatively it could represent the use of a 16x16 pixel FSR texel in combination with an antialiasing setting requiring two samples per pixel in both the width and height directions. Further, it could represent the use of a single 32x32 FSR texel in combination with no anti-aliasing (similar to Fig. 8C). Still further, it could represent a tile mapping to an area that falls entirely within a larger FSR texel (e.g. at 64x64,128x128 or 256x256 FSR texel).

It will be apparent from the foregoing discussion of Figs 7A-E that the determination of which attachment FSR texel is relevant to a particular area of a tile can depend on a number of factors such as the maximum tile size, the number of possible FSR texel sizes and the available antialiasing rates. For example, the discussion of Figs 7A-E only considers available anti-aliasing settings in which the sampling rates in the height and width direction are the same or for which the sampling rate in the height direction is double that in the width, up to a maximum of four samples per pixels in both directions. Other systems may have other anti-aliasing settings (e.g. allowing greater sampling in the width compared to the height). However, for a given system, those factors are known, and the various possible combinations of FSR regions within a tile, such as the combinations shown in Figs 7A-E for the example system, can be determined. Moreover, by providing an index to each FSR region in each of the combinations (an example of which is also shown by the numbering within the regions in Figs 7A-E) it becomes possible to reference the relevant attachment FSR region for a position in the tile.

As such, when the sampling unit 117 performs the sampling to determine the primitive fragments, and creates the microtiles to issue to the texturing/shading unit 120, it can determine the location of a fragment in the tile and use the appropriate attachment FSR region index to retrieve the corresponding attachment FSR value for the appropriate attachment FSR texel.

For example, when processing a particular tile, the sampling unit 117 can determine the attachment FSR regions in the tile and store the corresponding attachment FSR values from the relevant attachment FSR texels in a register. Such a register, is illustrated in Fig. 7F (for the example system previously described in connection with Figs 7A-E), being 64 bits in size, corresponding to 4 bits for each of the 16 possible indices for a tile. With such an arrangement, whatever the division of attachment FSR regions is determined for the particular tile being processed, the corresponding attachment FSR value for those regions can be stored in the lowest bits of the register (i.e. filling all the bits of the register when there are 16 attachment FSR regions within the tile). Then, before issuing a microtile to texturing/shading unit 120, the sampling unit 117 can, for each fragment within the microtile, retrieve the relevant FSR value from the register and combine it with the FSR value associated with the primitive from which the fragment is derived (e.g. the previously described first FSR value stored in the primitive block from which the primitive was retrieved). In other implementations, knowing that the fragments within a microtile will have the same first FSR value and will fall within the same attachment FSR region within the tile, the calculation of the combination of the first FSR value and the attachment FSR value may be performed once and associated with each of the fragments in the microtile.

### Use of Masks

Masks are used within graphics processing systems to apply a function to a fragment. Masks can be used within processing to indicate coverage of a fragment. Alternatively masks can be used to apply a filter or a different function to a fragment. However, fragments may be of different sizes, varying from, for example, 1x1 to 4x4 pixels. Furthermore, different sampling rates may be applied to the fragment. Therefore, different elements within a mask will address different pixels for different configurations of mask sizes and sampling rates.

Figure 8 depicts different mask arrangements for an example system. Masks 801, 802, 803, 804 are used for different sampling rates of a fragment 1 pixel x 1 pixel in size. A 1x1 fragment with just a single sample per pixel requires just one element; this is shown in mask 801 by indicating sample a0 associated with pixel a in the lowest (zeroth) position of the mask. In contrast, a 1x1 fragment with a sampling rate of 8 per pixel requires eight elements; this is depicted in mask 804 by indicating samples a0-a7 associated with pixel a in the lowest 8 positions of the mask . Masks 805, 806, 807 and 808 can be applied to fragments of size 1x2, composed of pixels a and b. The different masks used up to a size of a 4x4 fragment (with up to pixels a-h) are depicted in Fig. 8. As can be seen, different masks are used for different shader fragment sizes and different sampling rates, and the mask position associated with a particular sample position can vary from mask to mask (e.g. a0 is at position 0 in mask 801 but at position 4 in mask 807).

It can be advantageous to apply a mask as early as possible in the processing as this can avoid excess elements needing to be processed, which in turn can provide power savings. As described above, the pipeline and primitive shading rates (forming the combined shading rate) are known in the geometry processing phase, but the attachment fragment shading rate is not known until the rendering phase. The combined shading rate is combined with the attachment fragment shading rate to generate the shader fragment size. Thus, in general, it is not possible to select the mask until the attachment fragment shading rate is known.

However, in some situations attachment FSR is not used. Also, in some situations the attachment fragment shading rate will not alter the shader fragment size i.e. the combined shading rate will determine the shader fragment size regardless of the attachment fragment shading rate. In these situations, it has been recognised that it is possible to select and apply the mask earlier in the processing. This avoids excess elements from being processed and therefore reduces the overall processing load compared to the naïve approach of always waiting for the shader fragment size to be determined before applying the mask.

Figure 9 depicts an arrangement for this. Initially, a combined shading rate is received. At step 902 it is determined whether it is not possible for the fragment shade size to be affected by an attachment fragment shading rate (this step occurs before the attachment fragment shading rate is known). In other words, it is determined whether the shader fragment size is already known before the attachment fragment shading rate is applied and the attachment fragment shading rate would not alter the shader fragment size. A determination that it is not possible for the fragment shade size to be affected by an attachment fragment shading rate could be arrived at, for example, because an attachment fragment shading rate is not being used or not enabled. This may be indicated by a flag and the system can read the flag. In another example, the combination operation for determining the overall shading rate from the combined shading rate (of the primitive shading rate and the pipeline shading rate) and the attachment fragment shading rate may be such that the overall shading rate is inevitably the same as the combined shading rate (e.g. because a 'keep' combiner will preferentially keep the existing combined shading rate).

If it is determined that it is not possible for the fragment shade size to be affected by an attachment fragment shading rate, , the sample mask is selected 903. Crucially, the sample mask selection step 903 may occur at a stage before the attachment fragment shading rate is known. The sample mask may be selected from a plurality of sample masks, each sample mask being for a different combination of fragment size and sampling rate. Once selected, the sample mask may also be applied to the one or more fragments. Once sampling has been performed, the sample mask can be applied at a stage before the attachment fragment shading rate is applied as it is known that it will not alter the overall fragment shading rate. As an example, the sample mask may be applied before depth sorting or hidden surface removal occurs. This reduces the overall processing as only the samples identified by the mask need to be processed.

If it is possible for the shader fragment size to be affected by an attachment fragment shading rate then no sample mask is selected at this stage. The attachment fragment shading rate is received in the rendering phase 904 and the overall shading rate is calculated 905. Figure 9 does not depict steps between steps 902 and 904 and, as an example, there may a depth sort process. The mask is then selected at step 906. In one example the sample mask is selected from the same selection of sample masks as the selection in step 903. However, in other examples a different selection of sample masks may be used. The selected sample mask may then be applied to one or more fragments.

Regardless of whether the mask has been selected at step 903 or at step 906 a shader program is then executed. In the example above, the sample mask has been applied before the shader program.

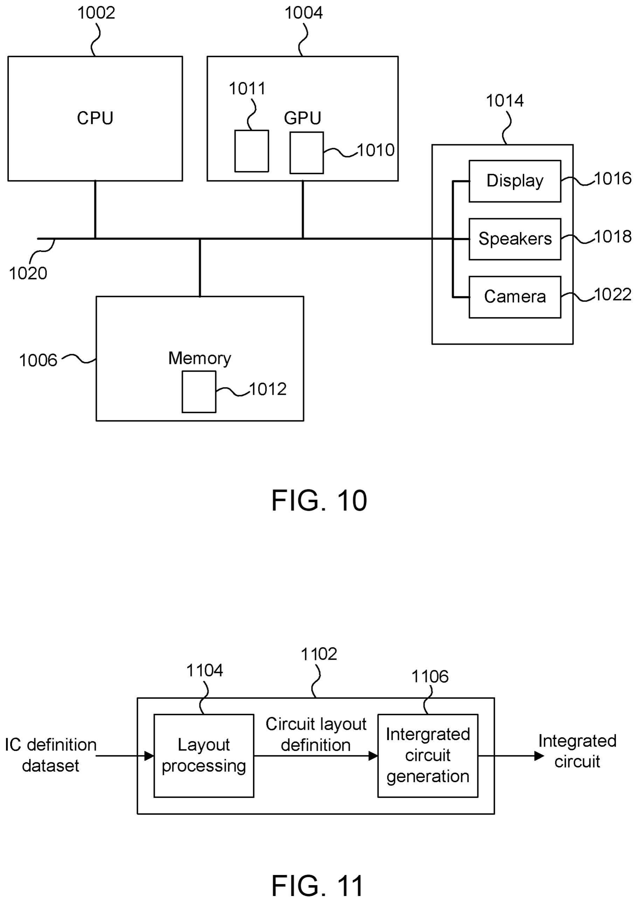

Figure 10 shows a computer system in which the graphics processing systems described herein may be implemented. The computer system comprises a CPU 1002, a GPU 1004, a memory 1006, a neural network accelerator (NNA) 1108 and other devices 1014, such as a display 1016, speakers 1018 and a camera 1022. Processing blocks 1010 and 1011 (corresponding to processing blocks 104 and 106) are implemented on the GPU 1004. In other examples, one or more of the depicted components may be omitted from the system, and/or the processing block 1010 may be implemented on the CPU 1002 or within the NNA 1008. The components of the computer system can communicate with each other via a communications bus 1020. A store 1012 (corresponding to memory 102) is implemented as part of the memory 1006.

The graphics processing system of Figure 1 is shown as comprising a number of functional blocks. This is schematic only and is not intended to define a strict division between different logic elements of such entities. Each functional block may be provided in any suitable manner. It is to be understood that intermediate values described herein as being formed by a graphics processing system need not be physically generated by the graphics processing system at any point and may merely represent logical values which conveniently describe the processing performed by the graphics processing system between its input and output.

The graphics processing systems described herein may be embodied in hardware on an integrated circuit. The graphics processing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an applicationspecific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a graphics processing system configured to perform any of the methods described herein, or to manufacture a graphics processing system comprising any apparatus described herein. An integrated circuit definition dataset may be, for example, an integrated circuit description.

Therefore, there may be provided a method of manufacturing, at an integrated circuit manufacturing system, a graphics processing system as described herein. Furthermore, there may be provided an integrated circuit definition dataset that, when processed in an integrated circuit manufacturing system, causes the method of manufacturing a graphics processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a graphics processing system will now be described with respect to Figure 11.

Figure 11 shows an example of an integrated circuit (IC) manufacturing system 1102 which is configured to manufacture a graphics processing system as described in any of the examples herein. In particular, the IC manufacturing system 1102 comprises a layout processing system 1104 and an integrated circuit generation system 1106. The IC manufacturing system 1102 is configured to receive an IC definition dataset (e.g. defining a graphics processing system as described in any of the examples herein), process the IC definition dataset, and generate an IC according to the IC definition dataset (e.g. which embodies a graphics processing system as described in any of the examples herein). The processing of the IC definition dataset configures the IC manufacturing system 1102 to manufacture an integrated circuit embodying a graphics processing system as described in any of the examples herein.

The layout processing system 1104 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1104 has determined the circuit layout it may output a circuit layout definition to the IC generation system 1106. A circuit layout definition may be, for example, a circuit layout description.

The IC generation system 1106 generates an IC according to the circuit layout definition, as is known in the art. For example, the IC generation system 1106 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1206 may be in the form of computer-readable code which the IC generation system 1106 can use to form a suitable mask for use in generating an IC.

The different processes performed by the IC manufacturing system 1102 may be implemented all in one location, e.g. by one party. Alternatively, the IC manufacturing system 1102 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a graphics processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 9 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 10, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of rendering in a graphics processing system supporting variable fragment shading rate, the method comprising:
determining (902) whether it is not possible for the shader fragment size to be affected by an attachment fragment shading rate, the shader fragment size being determined by a combination of the attachment fragment shading rate with another fragment shading rate;
if it is not possible for the shader fragment size to be affected by an attachment fragment shading rate selecting (903) and applying a sample mask before the system is configured to combine the attachment fragment shading rate with the another fragment shading rate;
if it is possible (904) for the shader fragment size to be affected by an attachment fragment shading rate selecting and applying a sample mask after the attachment fragment shading rate is combined with the another fragment shading rate.

2. A method according to claim 1 wherein determining whether it is not possible for the shader fragment size to be affected by an attachment fragment shading rate comprises determining whether the attachment fragment shading rate is enabled.

3. A method according to claim 2 wherein determining whether it is not possible for the shader fragment size to be affected by an attachment fragment shading rate comprises reading an attachment fragment shading rate flag.

4. A method according to any one of the preceding claims wherein determining whether it is not possible for the shader fragment size to be affected by an attachment fragment shading rate comprises determining that the another fragment shading rate is a value that would not be altered by the attachment fragment shading rate.

5. A method according to any one of the preceding claims further comprising executing, by a processor, a shader program and wherein the mask is applied to the input of the shader program.

6. A method according to any one of the preceding claims further comprising executing, by a processor, a shader program and wherein the mask is applied to the output of the shader program.

7. A method according to any one of the preceding claims wherein selecting a sample mask comprises selecting a sample mask from a plurality of sample masks, wherein the plurality of sample masks comprise sample masks for a plurality of different size fragments.

8. A method according to claim 7 wherein masks for different size fragments use different bits to address different pixels in the fragment.

9. A method according to any one of the preceding claims wherein selecting a sample mask comprises selecting a sample mask from a plurality of masks, wherein the plurality of sample masks comprise sample masks for a plurality of sampling rates per pixel.

10. A method according to claim 9 wherein masks for different sampling rates per pixel use different bits to address different pixels in the fragment.

11. A method according to any of the preceding claims, wherein the another fragment shading rate is a pipeline fragment shading rate, a primitive shading rate or a combination of a pipeline fragment shading rate and a primitive fragment shading rate.

12. A method according to claim 11, wherein the another fragment shading rate is a combination of a pipeline fragment shading rate and a primitive fragment shading rate, and wherein the combination of the pipeline fragment shading rate and the primitive fragment shading rate is determined before determining whether it is not possible for the shader fragment size to be affected by an attachment fragment shading rate.

13. A graphics processing system configured to support variable fragment shading rate, wherein the graphics processing system comprises logic configured to:
determine (902) whether it is not possible for the shader fragment size to be affected by an attachment fragment shading rate, the shader fragment size being determined by a combination of the attachment fragment shading rate with another fragment shading rate;
if it is not possible for the shader fragment size to be affected by an attachment fragment shading rate select and apply (903) a sample mask before the system is configured to combine the attachment fragment shading rate with the another fragment shading rate;
if it is possible for the shader fragment size to be affected by an attachment fragment shading rate select and apply (904) a sample mask after the attachment fragment shading rate is combined with the another fragment shading rate.

14. A graphics processing system configured to perform the method of any of claims 1 to 12.

15. Computer readable code configured to cause the method of any of claims 1 to 12 to be performed when the code is run.
